# NEW EUROPEAN PATENT SPECIFICATION

(11) **EP 0 526 764 B2**
(45) Date of publication and mention of the opposition decision: **28.04.2004**
(45) Mention of the grant of the patent: 15.05.1996
(21) Application number: 92111815.4
(22) Date of filing: 10.07.1992
(51) Int. Cl.: H04Q 7/38, H04B 7/26

(54) **Method for contacting a subscriber of a mobile telephone network**
Verfahren zur Verbindungsherstellung eines Mobilfunkteilnehmers
Procédé d'établissement d'une connexion d'abonné d'un réseau téléphonique mobile

(30) Priority: 24.07.1991 FI 913543
(43) Date of publication of application: 10.02.1993
(73) Proprietor: TeliaSonera Finland Oyj, 00510 Helsinki (FI)
(72) Inventor: Manninen, Alpo, SF-00511 Helsinki (FI)
(74) Representative: Harrison, Michael Charles

(56) References cited:
- EP-A- 0 169 726
- EP-A- 0 433 465
- WO-A-91/07838
- IEEE GLOBAL TELECOMMUNICATIONS CONFERENCE & EXHIBITION. vol 1, 2 dec 1990, SAN DIEGO (US) pages 420-426. J REGNIER ET AL. " Personal Communication Services- The New Pots".

## Description

The object of the invention is a method for using a mobile telephone network in accordance with the introduction part of patent claim 1.

A central factor in the development of mobile telephone services is that subscribers want to be as readily contactable as possible. During the development of the present application the inventor used a system in which the subscriber has just the one telephone number; when this number is dialled, the call is connected to the subscriber's NMT-900 or NMT-450 telephone. If no-one answers the subscriber's telephone, or if the said telephone happens to be switched off, a message can be automatically transmitted to a paging service or it can be transferred to another NMT telephone or a telephone that is linked to a fixed network. A disadvantage of the said system is that if no-one answers the telephone that is being dialled, the subscriber can be sought at only one other location. This kind of a system does not take into account, for example, the fact that networks and devices can change and that one more network or device should be made available for linking to automatic paging. Nor does it take into account the possibility that a subscriber may want to retain contactability with respect to all available communication media.

A similar mobile telephone network to that mentioned above is known from the WO-A-91/07 838. A call may be handled in a manner such that the call is switched to another telephon number.

On the technical level, when calling an NMT-900 mobile telephone subscriber, for instance, the subscriber can also be paged from a telephone other than his/her own mobile telephone if it happens to be disconnected at the moment, but nevertheless from no more than one place; e.g. a telephone linked to a fixed network or from a paging device. This call transfer function set by an operator in the NMT-900 centre is thus used to call the next number if the NMT telephone is not switched on. The disadvantage here is, however, that the call is transferred in a manner that does not enable the subscriber to be paged from several communication media or telephone numbers.

Contactability is always poor when the communication medium is not switched on because this is when the caller usually gets a brief message saying, for example, that contact is not possible. When a subscriber changes over to a new network or communication medium, the subscriber has to inform his/her business associates, friends, etc. what the new number is and to have new letter templates and business cards printed. A further hinderance is that people have telephones in different networks and these, of course, have different telephone numbers.

The method in accordance with the invention brings about a decisive improvement with respect to the aforementioned shortcomings. For this to be implemented, the method in accordance with the invention is characterised by what is presented in the characterization part of the claim 1.

One advantage of the invention is that the subscriber's number remains unchanged whatever the network or communication medium he/she might use as the contact data remain the same. Contactability is also enhanced by the feature that the customer can always use the communication device most appropriate for the situation when receiving calls and incoming calls are automatically directed at the preselected device.

In the following, an embodiment of the invention is described in detail with references being made to the appended drawing.
Figure 1 shows a diagram of the system used in the method in accordance with the invention for the purpose of paging a mobile telephone subscriber.
Figure 2 shows by way of a flow chart an example of a how a subscriber might be paged.
Figure 3 shows an example of one register in a controller and register unit.

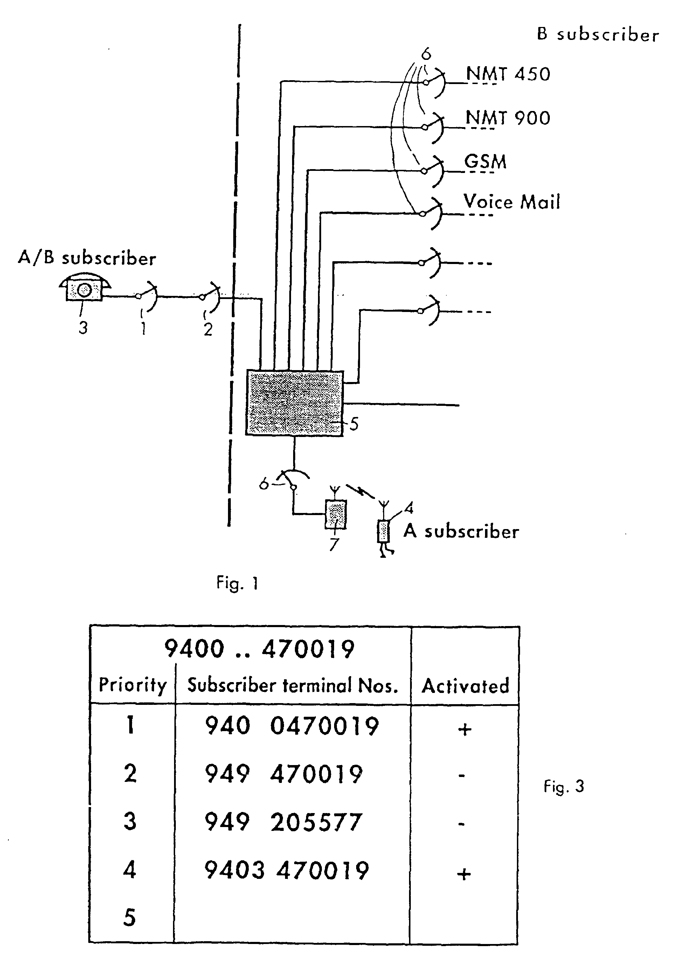

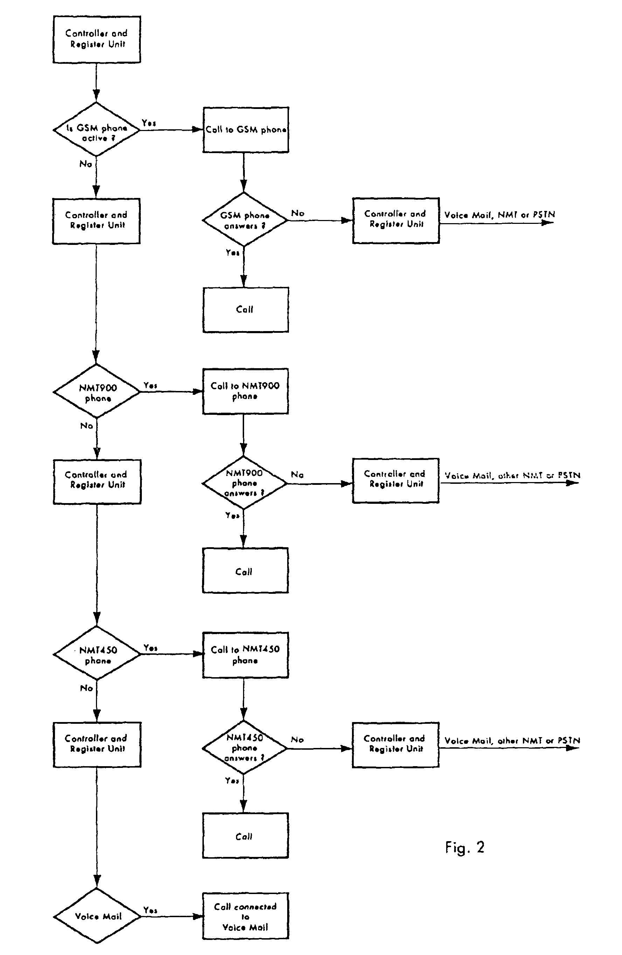

Figure 2 shows a schematic diagram of a system in accordance with the invention, the essential part in it being the controller and register unit 5. When the subscriber's personal mobile telephone number is dialled, calls coming in from wire or mobile telephone networks are directed at the control and register unit. If subscriber B answers the call, the call is automatically connected to B, and no special functions are required. If subscriber B does not answer the call or the telephone is not switched on, controller and register unit 5 functions are required. When subscriber A dials subscriber B's personal mobile telephone number while the telephone is in the off mode, the controller directs the call to the next number in order of priority in accordance with the register data. If that too is in the off mode, the paging process goes on until a response is obtained; e.g. from the paging device last in order of priority. When this happens, the controller informs the wire network that contact with the paging number or wire phone (PSTN) must be switched on. The controller and register unit 5 does not connect calls immediately but instead it goes through the register containing several different numbers checking to which network the calls can be connected on the basis of the information provided by the controller unit. The reference number 1 in Figure 1 depicts local network connections while number 2 refers to trunk network connections. B depicts the receiver of the call who has a personal number and A depicts the caller who may be calling from a fixed network telephone 3 or a mobile phone 4. The controller and register unit is depicted by the number 5, mobile exchanges by 6 and their base stations by 7.

The data entered in this kind of a controller and register unit 5 can be set to change with time; i.e. the order of the communications media in the register in the morning can be different to that in the evening. Subscriber B is in a position to after the data by means of a telephone; e.g. the order of priority of the various telephone numbers, contact times, contact numbers, etc. The numbers used in future networks can also be entered in the register so that contact with a new network is achieved by using the same personal subscriber number. Subscriber A does not know which network he has contacted subscriber B in because the number used is the same regardless of changes in the accessed network.

Figure 3 shows an example of how the controller and register unit 5 is able to control a call between different networks. When subscriber A dials subscriber B's personal mobile telephone number (e.g. 9400 470019), the call goes to the controller and register unit 5 where the register contains the information concerning the numbers allotted to subscriber B (e.g. GSM number 940 0470019, NMT-900 number 949 470019, NMT-450 number 949 205577 and paging device number 9403 470019) as shown in Fig. 3 by way of an example of the data stored in a single register in a controller and register unit 5. In addition, the register contains information on whether the telephone corresponding to the number is active or not; i.e. whether the device is switched on or off.

According to the call entering the controller and register unit 5 shown in the flow chart in Fig. 2, a check is carried out to see whether the GSM telephone is active. If it is, the controller and register unit informs the GSM network's connecting device that the call is to be connected. If the telephone is answered, the call is connected. If the telephone is not answered, the call is directed back to the controller and register unit 5 where a search is conducted to determine the next active telephone number or communication medium. If it happens to be a paging device, then the controller and register unit 5 informs that the call must be connected to the paging network. If the GSM telephone is busy, it is possible to produce a mere busy signal or the call can be directed back to the controller and register unit 5 which can then pass on the information to paging, for instance.

In addition, the flow chart includes the functions corresponding to the GSM network presented for NMT-900 and NMT-450. Once an active message has been found, contact will be made using normal connections.

### List of references

Fig. 1 Principal solution of personal mobile number:
- 1 =: Local network connection
- 2 =: Trunk network connection
- 3 =: Fixed network telephone
- 4 =: Mobile subscriber
- 5 =: Controller and Register Unit
- 6 =: Mobile exchanges
- 7 =: Base station

Fig. 3 Example for call forwarding procedure in controller and register unit:
1. priority = GSM (global system for mobile telecommunication) phone
2. priority = NMT-900 (Nordic Mobile Telephone) phone
3. priority = NMT-450 (Nordic Mobile Telephone) phone
4. priority = Voice mail
5. priority = Subscriber - activated 'Follow me' services overriding 1 to 4 until deactivated

## Claims

1. A method for contacting a suscriber of a mobile telephone network in which the subscriber has one personal mobile number and more than one communication media,
wherein calls coming into the personal mobile number are directed to a controller and register unit (5) containing the numbers of the subscriber's (B) communication media that can be reached by dialling the personal mobile number and
wherein in accordance with predefined register data, the controller and register unit (5) selects that communication medium number to which the call is directed via a connecting device or network (1, 2, 5, 7),
**characterized in that**
the controller and register unit (5) directs the dialling party (A) sequentially to each of the other communication media of the subscriber (B) in the order determined by the predefined register until one of the other communication media answers the line, at which point the call is connected, and **in that** the controller and register unit (5) monitors data of activeness and inactiveness of the mobile telephone media of the subscriber (B) registered therein, and that the controller and register unit (5) provides each of the said subscription numbers with corresponding mode data, and that the controller and register unit (5) sequentially directs rings only to those subscriber (B) terminals, which are active, i.e. in use or connected on, in accordance with a predefined order.

2. A method as claimed in claim 1, **characterized in that** the controller and register unit's (5) register contains the contact data of the subscriber's various networks (e.g. NMT, GSM, paging or some other network) and/or a wire telephone.

3. A method as claimed in claim 2, **characterized in that** the order of seeking of the data in the register can be varied according to time, according to order of priority and/or data concerning a new network can be added to it and/or existing contact data can be deleted while the personal number remains unchanged.

4. A method as claimed in claim 2 or 3, **characterized in that** the register data is inactive if the telephone is not switched on in which case the register's controller pages the next active communication medium and relays a message to the network.

5. A method as claimed in one of claims 2 to 4, **characterized in that** when the register lacks data on activeness the register's controller transmits the call to the network.

6. A method as claimed in one of claims 1 to 5, **characterized in that** when the mobile telephone is busy, the call is directed back to the controller and register unit (5) and from there to a paging facility.

7. A method as claimed in any of the above claims, **characterized in that** the mobile telephone number subscriber himself/herself changes the contact data by calling a service number or his/her own number and by using a secret code.

8. A method as claimed in any of the above claims, **characterized in that** the controller and register unit's (5) controller provides the network with information so that contact can be made with a desired device.

9. A method according to anyone of the claims 1 - 8, **characterized in that** the controller and register unit (5) monitors continuously activeness of each mobile telephone connection of the subscriber (B) and provides the register with the data of activeness or inactiveness, and the controller and register unit (5) passes the mobile phone connection previously recognized inactive.

## Patentansprüche

1. Verfahren zur Verbindungsherstellung mit einem Mobilfunknetzteilnehmer, bei dem der Teilnehmer eine persönliche Mobilfunknummer und mehr als ein Kommunikationsmedium hat,
wobei auf der persönlichen Mobilfunknummer ankommende Anrufe zu einer Steuer- und Registereinheit (5) weitergeleitet werden, die die Nummern der Kommunikationsmedien des Teilnehmers (B) enthält, die durch Wählen der persönlichen Mobilfunknummer erreicht werden können, und
wobei die Steuer- und Registereinheit (5) entsprechend vordefinierten Registerdaten jene Kommunikationsmediumsnummer auswählt, zu der der Anruf über eine Verbindungseinrichtung oder ein Verbindungsnetz (1, 2, 5, 7) geleitet wird,
**dadurch gekennzeichnet,**
**dass** die Steuer- und Registereinheit (5) den wählenden Teilnehmer (A) in der durch das vordefinierte Register bestimmten Reihenfolge nacheinander zu jedem der anderen Kommunikationsmedien des Teilnehmers (B) leitet, bis eines der anderen Kommunikationsmedien den Anruf beantwortet, wobei dann der Anruf verbunden wird, und
**dass** die Steuer- und Registereinheit (5) die Daten des Aktivseins und des Inaktivseins der darin registrierten Mobilfunkmedien des Teilnehmers (B) überwacht, und
**dass** die Steuer- und Registereinheit (5) jede der Teilnehmernummern mit entsprechenden Modusdaten versieht, und
**dass** die Steuer- und Registereinheit (5) Anrufe entsprechend einer vorbestimmten Reihenfolge aufeinanderfolgend nur zu solchen Anschlüssen des Teilnehmers (B) leitet, die aktiv sind, d.h. in Benutzung oder eingeschaltet.

2. Verfahren nach Anspruch 1, **dadurch gekennzeichnet,**
**dass** das Register der Steuer- und Registereinheit (5) die Verbindungsdaten der verschiedenen Netze des Teilnehmers (z.B. NMT, GSM, Rufsystem oder ein anderes Netz) und/oder ein Leitungstelefon enthält.

3. Verfahren nach Anspruch 2, **dadurch gekennzeichnet,**
**dass** die Reihenfolge des Suchens der Daten in dem Register gemäß der Zeit, gemäß der Reihenfolge der Priorität variiert werden kann und/oder Daten bezüglich eines neuen Netzes hinzugefügt werden können und/oder existierende Verbindungsdaten gelöscht werden können, während die persönliche Nummer unverändert bleibt.

4. Verfahren nach Anspruch 2 oder 3, **dadurch gekennzeichnet, dass** die Registerdaten inaktiv sind, wenn das Telefon nicht eingeschaltet ist, in welchem Falle die Steuerung des Registers das nächste aktive Kommunikationsmedium ruft und eine Nachricht an das Netz absetzt.

5. Verfahren nach einem der Ansprüche 2 bis 4, **dadurch gekennzeichnet, dass** die Steuerung des Registers den Anruf zu dem Netz überträgt, wenn das Register keine Daten über das Aktivsein enthält.

6. Verfahren nach einem der Ansprüche 1 bis 5, **dadurch gekennzeichnet, dass** der Ruf zurück zu der Steuer- und Registereinheit (5) und von dort zu einer Rufanlage geleitet wird, wenn das Mobiltelefon besetzt ist.

7. Verfahren nach einem der obigen Ansprüche, **dadurch gekennzeichnet, dass** der Teilnehmer mit der Mobilfunknummer selbst die Verbindungsdaten ändert, indem er eine Dienstleistungsnummer und seine/ihre eigene Nummer anruft und einen Geheimcode benutzt.

8. Verfahren nach einem der obigen Ansprüche, **dadurch gekennzeichnet, dass** die Steuerung der Steuer- und Registereinheit (5) das Netz so mit Information versieht, dass die Verbindung mit einer gewünschten Einrichtung durchgeführt werden kann.

9. Verfahren nach einem der Ansprüche 1 bis 8, **dadurch gekennzeichnet, dass** die Steuer- und Registereinheit (5) kontinuierlich das Aktivsein einer jeden Mobilfunkverbindung des Teilnehmers (B) überwacht und das Register mit den Daten des Aktivseins oder Nichtaktivseins versieht, und die Steuer- und Registereinheit (5) die Mobilfunkverbindung, die zuvor als inaktiv erkannt ist, weiterleitet.

## Revendications

1. Procédé pour mettre en contact un abonné d'un réseau de téléphone mobile, dans lequel l'abonné a un numéro mobile personnel, avec plus d'un support de communication,
dans lequel les appels arrivant sur le numéro mobile personnel sont dirigés vers une unité de contrôleur et de registre (5) contenant les numéros des supports de communication de l'abonné (B) pouvant être atteints en composant le numéro mobile personnel et
dans lequel, en fonction de données de registre prédéfinies, l'unité de contrôleur et de registre (5) sélectionne le numéro du support de communication vers lequel l'appel est dirigé, par l'intermédiaire d'un dispositif ou réseau de connexion (1, 2, 5, 7),
**caractérisé en ce que**
l'unité de contrôleur et de registre (5) dirige les éléments de numérotation (A) séquentiellement vers chacun des autres supports de communication de l'abonné (B), dans l'ordre déterminé par le registre prédéfini, jusqu'à ce que l'un des autres supports de communication réponde à la ligne, au point où l'appel est connecté et **en ce que** l'unité de contrôleur et de registre (5) surveille les données d'activité et d'inactivité du support de téléphone mobile de l'abonné (B) enregistrées dans celui-ci, et **en ce que** l'unité de contrôleur et de registre (5) fournit à chacun desdits numéros d'abonnement les données de mode correspondantes, et **en ce que** l'unité de contrôleur et de registre (5) ne dirige séquentiellement les appels qu'aux terminaux d'abonnés (B) qui sont actifs, c'est-à-dire en cours d'utilisation ou connectés, selon un ordre prédéfini.

2. Procédé selon la revendication 1, **caractérisé en ce que** le registre de l'unité de contrôleur et de registre (5) contient les données de mise en contact des divers réseaux d'abonnés (par exemple, NMT, GSM, appel de personne ou autres réseaux) et/ou d'un téléphone à fil.

3. Procédé selon la revendication 2, **caractérisé en ce que** l'ordre de recherche des données dans le registre peut varier en fonction du temps, en fonction de l'ordre de priorité et/ou des données concernant un nouveau réseau qui peuvent être ajoutées à celui-ci et/ou des données de mise en contact existantes qui peuvent être effacées alors que le numéro personnel reste inchangé.

4. Procédé selon la revendication 2 ou 3, **caractérisé en ce que** les données de registre sont inactives si le téléphone n'est pas sous tension, auquel cas le contrôleur de registre recherche le support de communication actif suivant et relaie un message au réseau.

5. Procédé selon l'une des revendications 2 à 4, **caractérisé en ce que** lorsqu'il manque des données au registre en activité, le contrôleur de registre transmet l'appel au réseau.

6. Procédé selon l'une des revendications 1 à 5, **caractérisé en ce que** lorsque le téléphone mobile est occupé, l'appel est dirigé en retour vers l'unité de contrôleur et de registre (5), et de là vers une installation de recherche.

7. Procédé selon l'une quelconque des revendications précédentes, **caractérisé en ce que** l'abonné(e) au numéro de téléphone mobile modifie lui-même / elle-même les données de contact en appelant un numéro de service ou son propre numéro, et en utilisant un code secret.

8. Procédé selon l'une quelconque des revendications précédentes, **caractérisé en ce que** le contrôleur de l'unité de contrôleur et de registre (5) fournit au réseau des informations, de façon que le contact soit effectué avec un dispositif désiré.

9. Procédé selon l'une quelconque des revendications 1 à 8, **caractérisé en ce que** l'unité de contrôleur et de registre (5) surveille continuellement l'activité de chaque connexion de téléphone mobile de l'abonné (B), et fournit au registre les données d'activité ou d'inactivité, et le contrôleur et l'unité de registre (5) passe la connexion de téléphone mobile reconnue précédemment inactive.
